# EUROPÄISCHE PATENTSCHRIFT

(11) **EP 3 550 684 B1**
(45) Veröffentlichungstag und Bekanntmachung des Hinweises auf die Patenterteilung: **18.02.2026**
(21) Anmeldenummer: 18166038.2
(22) Anmeldetag: 06.04.2018
(51) Int. Cl.: H02G 1/12

(54) **ABISOLIEREN VON ELEKTRISCHEN LEITUNGEN MITTELS ULTRASCHALLS**
STRIPPING OF ELECTRICAL LINES BY MEANS OF ULTRASOUND
DÉNUDAGE DE CONDUITES ÉLECTRIQUES PAR ULTRASONS

(43) Veröffentlichungstag der Anmeldung: 09.10.2019
(73) Patentinhaber: Telsonic Holding AG, 9552 Bronschhofen (CH)
(72) Erfinder: Lang, Georg, 97855 Triefenstein (DE)
(74) Vertreter: Hepp Wenger Ryffel AG

(56) Entgegenhaltungen:
- EP-A1- 2 722 949
- CN-A- 105 790 169
- JP-A- H 066 922
- US-A- 3 909 911
- US-B1- 6 442 833

## Beschreibung

Die vorliegende Erfindung befasst sich mit Verfahren und Vorrichtungen zum zumindest teilweisen Abisolieren von elektrischen Leitungen sowie mit zumindest teilweise abisolierten elektrischen Leitungen. Die Leitung, die beispielsweise als Rundleitung ausgebildet sein kann, hat eine Längsrichtung und enthält mindestens einen elektrischen Leiter und eine Isolierung, die den Leiter in Umfangsrichtung insbesondere vollständig umhüllt.

Um Leitungen zumindest teilweise abzuisolieren, werden verschiedene Verfahren eingesetzt. Eine Möglichkeit besteht darin, die Isolierung mit einer scharfen Schneidklinge einzuritzen. In anderen Verfahren wird die Isolierung durch das Einbringen von thermischer Energie geschmolzen. Alternativ dazu kann die Isolierung auch durch Laserschweissen entfernt werden. Dabei werden jedoch teilweise gesundheitsschädliche Stoffe verdampft, die abgesaugt werden müssen. Zudem lassen sich nicht sämtlich technische relevanten Materialien mittels Laserschweissen bearbeiten, beispielsweise schon dann nicht, wenn sie eine ungeeignete Farbe haben.

Aus dem Stand der Technik ist es auch bekannt, elektrische Leitungen mit Hilfe von Werkzeugen abzuisolieren, die zu Ultraschallschwingungen anregbar sind, die das Abisolieren erleichtern. So offenbart beispielsweise das Dokument JP 2000-92644 A ein durch Ultraschall unterstütztes Abisolieren von Rundleitungen mit Hilfe von zwei gegenüber angeordneten Schneideinrichtungen, die beispielsweise V-förmige scharfe Schneidkanten aufweisen können.

Die US 3,909,911 befasst sich mit dem Entfernen von Isolier- oder Abschirmmaterial von flachen Leitungen. Hierzu wird ein Werkzeug in Richtung auf den elektrischen Leiter bewegt und zu Ultraschallschwingungen angeregt, und die Isolierung wird dann durch eine Art von Schälbewegung entfernt.

Problematisch an den bekannten Verfahren und Vorrichtungen ist jedoch, dass die in der Praxis abzuisolierenden elektrischen Leitungen und deren elektrischen Leiter niemals eine vollkommen einheitliche Dicke und Rundheit aufweisen und die Leiter auch nicht immer zentriert angeordnet sind. In Unkenntnis dieser Parameter für jede individuelle Leitung kann es passieren, dass bei einer Leitung mit einem überdurchschnittlich dicken Leiter ein Teil des Leiters, insbesondere einzelne Drähte des Leiters, eingekerbt, abgeschabt oder sogar vollständig durchtrennt wird und/oder dass bei einer Leitung mit einem unterdurchschnittlich dicken Leiter die Isolierung nicht vollständig entfernt wird. Dies kann zu erheblichen Schwankungen in den Eigenschaften und damit der Qualität der abisolierten Leitungen führen, unter anderem im Hinblick auf die reduzierte Leitfähigkeit und auch auf nachfolgende Ultraschallschweissungen.

Das Dokument US 6,442,833 B1 offenbart ein Verfahren zum Abisolieren eines isolierten elektrischen Drahtes, in dem Umfangsschnitte in einer Isolierbeschichtung des Drahtes unter Verwendung von Umfangsschneidern gebildet werden und dann die Umfangsschneider in einer Längsrichtung des Drahtes bewegt werden, um geschnittene Stücke der Beschichtung voneinander zu trennen. Nachdem Längsschnitte in der Beschichtung unter Verwendung von Längsschneidern gebildet worden sind, wird die Beschichtung durch einen Luftstrom entfernt, und eine obere Abfallbeschichtung wird durch ein Vakuum abgesaugt. Eine Ultraschallsonotrode kann verwendet werden, um die Beschichtung gegen die Längsschneider zu drücken, während Ultraschallschwingungen erzeugt werden.

In CN 105790169 A wird eine Ultraschallwellen-Abisoliermaschine offenbart. Diese verfügt über eine Kabelklemmfunktion, mittels deren das Abisolieren von Kabeln mit Mineralisolierung in verschiedenen Spezifikationen angepasst werden kann. Dies ermöglicht eine hohe Abisoliereffizienz, eine hohe Abisoliergeschwindigkeit und eine geringe Verlustleistung.

Das Dokument JP 2000-092644 A befasst sich mit der Aufgabe, einen Isolierfilm eines Kabels präzise abzuisolieren, ohne den Kerndraht zu schneiden, und den Verschleiss eines Schneiders zu verhindern. Gelöst wird dies durch eine Kabelabisolierausrüstung und ein Verfahren. Diese enthalten Kabelfutter zum Halten eines Kabels und Ultraschallschneider zum Schneiden eines Isolierfilms des Kabels. Abisolierzangen zum Ziehen des Isolationsfilms in der Entfernungsrichtung sind benachbart zu den Schneidern vorgesehen. Das Kabel wird von den Kabelfuttern gehalten, und dann wird der Isolationsfilm abwechselnd mit den Schneidern unter Ultraschall-Vibrationen geschnitten. Nachdem der Isolierfilm mit den Messern eingeschnitten wurde, wird ermit den Abisolierzangen vom Kabel abgezogen und entfernt.

Die JPH 6-6922 A lehrt, wie die Einschneidetiefe einer Abisolierklinge beim Abisolieren eines umhüllten Kabels für jede Art von elektrischer Ausrüstung gesteuert werden kann. Ein umhülltes Kabel, das aus einem Kerndraht und einer umhüllten Schicht besteht, wird durch eine Öffnung zwischen den Abisolierkanten zu einem Kabelhalterohr geschickt. Die Abisolierkanten schneiden in die umhüllten Schichten, indem sie eine Kugelmutter durch einen Motor antreiben. Eine Leitfähigkeitserfassungseinrichtung erfasst die elektrische Leitfähigkeit durch den Kontakt zwischen den Abstreifkanten und dem Kerndraht und hält den Motor an. Die Deckschicht wird durch das Drehen von Zufuhrwalzen abgestreift.

Wie isolierende und/oder abschirmende Materialien in einem Flachkabel usw. entfernt werden können, beschreibt das Dokument US 3,909,911 A, welches ein Verfahren nach dem Oberbegriff des Anspruchs 1 und eine Vorrichtung nach dem Oberbegriff des Anspruchs 8 offenbart.

Hierzu wird ein durch Ultraschall angeregtes Werkzeug bereitgestellt, es wird Druck auf das Werkzeug ausgeübt, damit dessen Spitze in die Oberfläche des Flachleiters eindringt, und danach werden die Werkzeugspitze und der Leiter relativ zueinander in einer Schälbewegung bewegt, die das isolierende und/oder abschirmende Material abträgt. Die Ultraschallbewegung der Werkzeugspitze erfolgt in einer Ebene, die im Allgemeinen parallel zur Leiteroberfläche verläuft. Ausserdem ist die Endfläche der Werkzeugspitze im Wesentlichen flach und greift flach an der Leiterfläche an (oder nähert sich ihr eng an). Dies ermöglicht das Entfernen der isolierenden und/oder abschirmenden Substanzen, ohne den Leiter zu beschädigen. Darüber hinaus kann jede gewünschte Kabellänge effektiv und schnell abisoliert werden, ohne grosse Mengen an Druck oder Kraft anzuwenden.

Es ist eine Aufgabe der vorliegenden Erfindung, die bekannten Verfahren und Vorrichtungen dahingehend weiterzuentwickeln, dass die oben genannten Nachteile möglichst verhindert werden. Insbesondere soll sichergestellt werden können, dass der Leiter möglichst nicht beschädigt wird, aber trotzdem die Isolierung in ausreichendem Masse entfernt wird.

In einem ersten Aspekt werden diese und weitere Aufgaben gelöst durch ein Verfahren nach Anspruch 1 zum zumindest teilweisen Abisolieren einer elektrischen Leitung. Die Leitung hat eine Längsrichtung und kann beispielsweise eine Rundleitung sein, die senkrecht zur Längsrichtung einen im Wesentlichen kreisförmigen Querschnitt aufweist. Die elektrische Leitung enthält mindestens einen elektrischen Leiter und eine Isolierung, die den mindestens einen Leiter in Umfangsrichtung insbesondere vollständig umhüllt. Die Leitung kann als Koaxialleitung ausgebildet sein, die einen elektrischen Innenleiter und einen oder mehrere elektrische Aussenleiter enthält. Der elektrische Leiter kann einen einzelnen Draht, insbesondere einen Lackdraht, enthalten oder daraus bestehen oder auch mehrere Drähte enthalten oder daraus bestehen. Auch eine elektrische Abschirmung, wie etwa ein Abschirmgeflecht, wird im Rahmen der Erfindung als elektrischer Leiter angesehen.

Das Verfahren umfasst die Schritte:
a) Inkontaktbringen einer Arbeitsfläche mindestens eines zu Ultraschallschwingungen anregbaren Ultraschallwerkzeugs mit einem von einem Ende der Leitung beabstandeten Einwirkbereich der Isolierung,
b) Einbringen von Ultraschall mittels des Ultraschallwerkzeugs in den Einwirkbereich, um die Isolierung ausschliesslich im Einwirkbereich und dort zumindest entlang eines Teils, insbesondere entlang der gesamten Umfangsrichtung zu verdrängen.

Die Isolierung kann beispielsweise aus einem Kunststoff wie etwa PVC, Silikon oder PTFE bestehen oder auch aus einem textilen Isolationswerkstoff. In vielen Ausführungsformen - insbesondere, wenn die Isolierung aus einem thermoplastischen Kunststoff besteht - kann die Isolierung vom Leiter verdrängt werden, in dem sie durch Einwirkung der Ultraschallschwingungen schmilzt. Aufgrund der Ultraschalleinwirkung kann auch eine Hochtemperatur-beständige Isolierung wie beispielsweise PTFE verdrängt werden, selbst wenn sie nicht schmilzt. Die Erfindung umfasst auch Ausführungsformen, in denen die Isolierung lediglich aus dem Einwirkbereich heraus verschoben wird, wobei sie nicht zwingend von der Leitung räumlich getrennt werden muss.

Ausserhalb vom Einwirkbereich - und damit unter anderem an dem vom Einwirkbereich beabstandeten Ende der Leitung - wird die Isolierung nicht verdrängt. Der Einwirkbereich kann vom Ende der Leitung beispielsweise einen Abstand haben, der mindestens 2 mm und bevorzugt mindestens 4 mm ist. Der Abstand kann höchstens 8 mm oder sogar höchstens 6 mm sein. Er kann aber auch grösser als 8 mm sein, beispielsweise wenn die Isolierung zur Herstellung eines Mittenabgriffs verdrängt werden soll. Ein Verdrängen der Isolierung findet nur im Einwirkbereich statt, und zwar zumindest entlang eines Teils, insbesondere entlang der gesamten Umfangsrichtung der Leitung.

Erfindungsgemäss ist die Arbeitsfläche derart stumpf und relativ zur elektrischen Leitung ausgerichtet, dass der Leiter während des Abisolierens - also während des Schritts b) - nicht durch die Arbeitsfläche beschädigt wird. Wenn die Leitung mehrere Leiter enthält, insbesondere wenn sie als Koaxialleitung ausgebildet ist, ist die Arbeitsfläche erfindungsgemäss derart stumpf und relativ zur elektrischen Leitung ausgerichtet, dass keiner der Leiter während des Abisolierens beschädigt wird. Dies steht im Gegensatz zu der aus JP 2000-92644 A bekannten Vorrichtung, die zwei Schneideinrichtungen mit scharfen Schneidkanten enthält, welche den Leiter beschädigen können, beispielsweise indem sie einzelne Drähte vollständig durchtrennen. Stattdessen wird erfindungsgemäss mit Hilfe des Ultraschallwerkzeugs nur die Isolierung verdrängt (beispielsweise, indem sie nur kurz angeschmolzen wird), sodass das Ultraschallwerkzeug in sie eindringen kann.

Unter einer Beschädigung, die erfindungsgemäss verhindert wird, wird hier und im Folgenden ein Einkerben, Abschaben oder Durchtrennen eines oder mehrerer Drähte des elektrischen Leiters verstanden. Eine blosse Deformation des elektrischen Leiters, die weder seine elektrischen Eigenschaften noch seine mechanische Festigkeit verändert, insbesondere bei einem nachfolgenden Ultraschallschweissen der Leitung, wird nicht als Beschädigung angesehen. Wenn sich insbesondere bei einem nachfolgenden Ultraschallschweissen durch eine blosse Deformation kein Bruch als Folge der Deformation einstellt, wird diese nicht als Beschädigung angesehen.

Zudem wird im Gegensatz zu den aus dem Stand der Technik bekannten scharfen Schneidkanten, in deren Bereich die Amplitude der Ultraschallschwingungen besonders gross ist, die Ultraschallleistung an einer erfindungsgemäss stumpfen Arbeitsfläche auf eine grössere Fläche verteilt, was ein kontrollierteres Verdrängen der Isolierung, insbesondere durch Schmelzen der Isolierung, erlaubt.

Erfindungsgemäss wird die Stumpfheit der Arbeitsfläche charakterisiert durch ihr erstes Profil in einer ersten Schnittebene, die die Längsrichtung der Leitung enthält. Wie sich gezeigt hat, können Beschädigungen des Leiters beim Abisolieren besonders wirkungsvoll verhindert werden, wenn erfindungsgemäss das erste Profil der Arbeitsfläche an jedem Punkt einen Krümmungsradius von mindestens 0,2 mm aufweist. Ein gerader Abschnitt des ersten Profils hat definitionsgemäss eine Krümmung von ∞, die grösser als 0,2 mm ist. Um die Ausdehnung der Arbeitsfläche in der Längsrichtung der Leitung zu beschränken, kann in zumindest einem Abschnitt des ersten Profils der Krümmungsradius höchstens 6 mm sein.

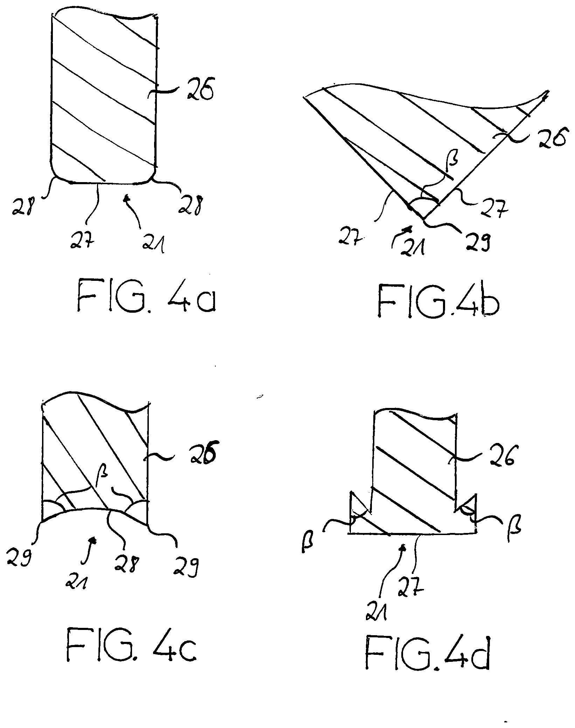

Zusätzlich kann zur Verhinderung von Beschädigungen des Leiters beim Abisolieren das erste Profil der Arbeitsfläche an jedem Punkt einen Keilwinkel von mindestens 60°, bevorzugt mindestens 90°, besonders bevorzugt mindestens 120° aufweisen. Der Keilwinkel an einem Punkt des ersten Profils ist hierbei (ähnlich wie in der Norm DIN 6581 für Winkel an Schneidteilen definiert) der bezüglich dieses Punktes gemessene Innenwinkel zwischen den beidseitig des Punktes verlaufenden Abschnitten des ersten Profils, wie weiter unten anhand der Figuren 4b bis 4d demonstriert wird. Die Krümmungsradien und Keilwinkel können beispielsweise in an sich bekannter Weise mittels eines optischen oder mechanischen Profilmeters bestimmt werden.

Als Arbeitsfläche wird im Rahmen der Erfindung der Teil des Ultraschallwerkzeugs verstanden, der bei der Durchführung des Verfahrens in Kontakt mit der Leitung gerät. Der Krümmungsradius und der Keilwinkel können vom Material und von der Dicke der Isolierung abhängen. Nicht zur Arbeitsfläche gehörende Oberflächenabschnitte des Ultraschallwerkzeugs dürfen in der ersten Schnittebene durchaus einen Krümmungsradius und/oder einen Keilwinkel ausserhalb des genannten Bereichs aufweisen.

Der elektrische Leiter kann beispielsweise aus Kupfer oder Aluminium bestehen. Da Aluminium weicher ist als Kupfer, entstehen bei diesem Material ohne spezielle Vorkehrungen besonders leicht Beschädigungen, sodass der Effekt der Erfindung hier noch ausgeprägter ist.

Ein Verdrängen der Isolierung im Wesentlichen entlang der gesamten Umfangsrichtung der Leitung lässt sich in einer Variante des Verfahrens dadurch erreichen, dass während des Schrittes a) und/oder während des Schritts b) zumindest zeitweise das Ultraschallwerkzeug in der Umfangsrichtung der Leitung um diese rotiert. Hierdurch kann das Verdrängen der Isolierung besonders gleichmässig entlang der gesamten Umfangsrichtung vollzogen werden.

In einer zweiten Variante können mehrere zu Ultraschallschwingung anregbare und mit einer jeweiligen Arbeitsfläche versehene Ultraschallwerkzeuge verwendet werden. Insbesondere können die mehreren Ultraschallwerkzeuge von gegenüberliegenden Seiten auf die Leitung einwirken. Hierdurch kann auf die aufwendigere Mechanik verzichtet werden, die für ein rotierendes Ultraschallwerkzeug erforderlich ist.

Erfindungsgemäss wird Schritt b) beendet, wenn ein Kontakt des Ultraschallwerkzeugs mit dem Leiter detektiert wird. Auf diese Weise kann das verbleibende Restrisiko noch weiter minimiert werden, dass die stumpfe Arbeitsfläche des Ultraschallwerkzeugs einen Leiter beschädigt, beispielsweise einen Leiter mit einer überdurchschnittlichen oder unerwartet grossen Dicke, einen Leiter mit elliptischem Querschnitt anstelle eines erwarteten kreisförmigen Querschnitts oder einen unerwartet nicht zentrierten Leiter. Eine solche Detektion ist besonders dann vorteilhaft, wenn das Ultraschallwerkzeug in bezüglich der Längsrichtung der Leitung radialer Richtung und/oder mit einer grossen Amplitude schwingt, beispielsweise mit einer Amplitude von mehr als 6 µm, bevorzugt mehr als 8 µm.

Bevorzugt kann zusätzlich eine Bewegung des Ultraschallwerkzeugs, insbesondere eine Bewegung des Ultraschallwerkzeugs in einer bezüglich der Längsrichtung der Leitung radialen Richtung auf die Leitung hin, beendet werden, wenn ein Kontakt des Ultraschallwerkzeugs mit dem Leiter detektiert wird. Hierdurch können mögliche Beschädigungen des Leiters nochmals effektiver verhindert werden.

Zum Abisolieren einer Charge von elektrischen Leitungen des gleichen Leitungstyps kann eine mit der Detektiereinheit verbundene Steuerungseinheit auf die minimalen Dicken des Leiters und der Isolierung eingestellt werden, die innerhalb der Charge erwartet werden. So wird in jedem Fall eine ausreichende Abisolierung erreicht. Hat eine oder haben mehrere Leitungen der Charge grössere Dicken, so kann die Steuerungseinheit nach entsprechender Meldung durch die Detektiereinheit den Schritt b) beenden. Aufgrund der Stumpfheit der Arbeitsfläche sind die Leiter zu diesem Zeitpunkt noch nicht beschädigt.

Äussert schnell und zuverlässig kann zu dem genannten Zweck ein Kontakt des Ultraschallwerkzeugs mit dem Leiter über die zwischen der Arbeitsfläche des Ultraschallwerkzeugs und dem Leiter vorliegende Spannung detektiert werden, also eine Potentialdifferenz zwischen der Arbeitsfläche des Ultraschallwerkzeugs und dem Leiter. Das Potential des Leiters kann beispielsweise an einer Stirnseite des Leiters am Ende der Leitung abgegriffen werden oder aber auch an einer Umfangsfläche, welche zuvor durch zum Beispiel punktuelles Entfernen der Isolierung zugänglich gemacht wurde.

In vielen Fällen wird der Leiter durch die Einbringung des Ultraschalls in Schritt b) nicht geschweisst. Allerdings ist es oftmals auch nicht schädlich oder kann es sogar vorteilhaft sein, wenn der Leiter durch die Einbringung des Ultraschalls in Schritt b) geschweisst wird.

Vorzugsweise enthält das Verfahren einen weiteren, nach dem Schritt b) durchgeführten Schritt c), in dem die Isolierung im Einwirkbereich in einen ersten Teil und einen bezüglich des Einwirkbereichs gegenüberliegenden zweiten Teil getrennt wird. Beispielsweise kann ein erster Teil der Isolierung vollständig vom verbleibenden Teil der Leitung abgezogen werden, sodass die abisolierte Leitung unmittelbar danach weiterverarbeitet werden kann, beispielsweise in einem Ultraschallschweissverfahren. Alternativ kann der erste Teil aber auch nur bis zu einem gewissen, insbesondere vorgegebenen Abstand zum zweiten Teil gezogen werden, ohne ihn jedoch vollständig vom verbleibenden Teil der Leitung abzuziehen. Hierdurch kann insbesondere ein Ausfransen des Endes des Leiters verhindert werden. Dies ist beispielsweise dann vorteilhaft, wenn der Leiter erst später, insbesondere nach einer Lagerung oder einem Transport, einem Ultraschallschweissverfahren unterzogen werden soll.

Besonders vorteilhaft ist es, wenn das Trennen der Isolierung im Schritt c) mit Hilfe des Ultraschallwerkzeugs selbst durchgeführt wird. Zum Trennen, also beispielsweise zum vollständigen Abziehen oder zum Teilabziehen um einen gewissen Abstand, ist dann kein weiteres Werkzeug erforderlich.

In einer konstruktiv einfachen Ausführungsform ist vorgesehen, dass während des Schritts a) und/oder während des Schritts b) das Ultraschallwerkzeug zumindest zeitweise an einer axialen Position der Leitung in einer bezüglich der Längsrichtung radialen Richtung auf die Leitung hin bewegt wird und dabei insbesondere die Arbeitsfläche in die Isolierung eindringt. Vorteilhafterweise wird während und/oder nach Schritt b) das Ultraschallwerkzeug an der gleichen axialen Position in der radialen Richtung von der Leitung wegbewegt. Mit weiterem Vorteil verbleibt das Ultraschallwerkzeug von der Bewegung auf die Leitung hin bis zur Bewegung der Leitung weg im Wesentlichen an der gleichen axialen Position. Das Ultraschallwerkzeug wird also nicht in der Längsrichtung an der Leitung entlang bewegt (abgesehen von der Ultraschallschwingung, die in dieser Richtung erfolgen kann). Im Gegensatz zu dem in US 3,909,911 offenbarten Verfahren wird die Isolierung somit nicht abgeschält. Hierdurch ergeben sich in Längsrichtung schmalere Einwirkbereiche und eine präzisere Durchtrennung der Isolierung.

Beispielsweise in Abhängigkeit von der Geometrie der Leitung kann es vorteilhaft sein, wenn ein zweites Profil der Arbeitsfläche in einer zur Längsrichtung senkrechten zweiten Schnittebene zumindest abschnittsweise eine Krümmung aufweist, insbesondere eine konkave Krümmung. Zu diesem Zweck kann ein Krümmungsradius der Krümmung in der zweiten Schnittebene an den Radius des elektrischen Leiters angepasst sein und insbesondere im Wesentlichen damit übereinstimmen. Um Beschädigungen des Leiters zu verhindern, kann das zweite Profil der Arbeitsfläche bevorzugt an jedem Punkt einen Krümmungsradius im Bereich von 0,1 mm bis 100 mm aufweisen. Mit einem konkav gekrümmten zweiten Profil kann ein Verdrängen der Isolierung entlang eines grösseren Teils entlang der Umfangsrichtung der Leitung erreicht werden als mit einem geraden zweiten Profil.

Alternativ oder zusätzlich kann das zweite Profil der Arbeitsfläche an jedem Punkt einen Innenwinkel von mindestens 60°, bevorzugt mindestens 120°, weiter bevorzugt mindestens 180°, noch weiter bevorzugt mindestens 240° und besonders bevorzugt mindestens 300° aufweisen. Es sind auch Arbeitsflächen von der Erfindung umfasst, die in der genannten zweiten Schnittebene keine Krümmung aufweisen.

Als zweckmässig hat es sich ausserdem erwiesen, wenn die Arbeitsfläche des Ultraschallwerkzeugs in der Längsrichtung der Leitung schwingt. Denn dann "hämmert" das Ultraschallwerkzeug nicht gegen die Isolierung und im weiteren Verlauf des Verfahrens nicht gegen den Leiter. Vielmehr dringt die Arbeitsfläche des Ultraschallwerkzeugs in die Isolierung ein, um sie dann mit der Schwingungsamplitude entlang der Längsrichtung der Leitung zu verschieben. Hierdurch kann das Risiko von Beschädigungen des Leiters nochmals deutlich reduziert werden. Alternativ dazu ist es aber auch denkbar und liegt im Rahmen der Erfindung, dass die Arbeitsfläche in einer bezüglich der Längsrichtung radialen Richtung oder in einer sowohl zur Längsrichtung als auch zur radialen Richtung senkrechten Richtung schwingt.

Das Ultraschallwerkzeug kann beispielsweise durch einen Linearschwinger, einen Torsionsschwinger oder einen Biegeschwinger gebildet sein. Ein Linearschwinger schwingt entlang einer Schwingungsachse. Die Arbeitsfläche eines Linearschwingers kann beispielsweise parallel oder senkrecht zur Schwingungsachse verlaufen. Ein Torsionsschwinger schwingt um eine Torsionsachse. Die Arbeitsfläche eines Torsionsschwingers kann sich beispielsweise an einer Stirnfläche befinden, die senkrecht zur Torsionsachse verläuft, oder an einer Umfangsfläche, die parallel zur Torsionsachse verläuft.

Der Torsionsschwinger kann einen scheibenförmigen Arbeitsbereich aufweisen, der bezüglich der Torsionsachse im Wesentlichen zylindersymmetrisch ausgebildet sein kann. Die Arbeitsfläche ist in dieser Ausführungsform durch die Umfangsfläche des Arbeitsbereichs gebildet. Mit besonderem Vorzug kann dieser Torsionsschwinger während des Abisolierens einer Leitung und/oder zwischen dem Abisolieren einer ersten Leitung und dem Abisolieren einer zweiten Leitung um seine Torsionsachse gedreht werden. Hierdurch kann eine gleichmässige Abnutzung der gesamten Arbeitsfläche und damit eine besonders hohe Standzeit des Torsionsschwingers erreicht werden.

Ein Torsionsschwinger mit scheibenförmigem Arbeitsbereich kann auch besonders vorteilhaft in der oben bereits beschriebenen Ausführungsform verwendet werden, in der er in der Umfangsrichtung der Leitung um diese rotiert. Optional kann der Torsionsschwinger dabei zusätzlich um seine Torsionsachse gedreht werden. Es ist weiterhin denkbar und von der Erfindung erfasst, dass während des Schrittes a) und/oder während des Schritts b) zumindest zeitweise die Leitung um den Torsionsschwinger mit scheibenförmigem Arbeitsbereich rotiert.

Weiterhin ist es denkbar und von der Erfindung erfasst, dass das Ultraschallwerkzeug als ein kombinierter Schwinger ausgebildet ist, dessen Schwingungen sowohl lineare als auch torsionale Anteile enthalten.

Mit weiterem Vorteil enthält das Ultraschallwerkzeug einen Grundkörper und mindestens einen damit lösbar verbundenen oder verbindbaren Werkzeugeinsatz, der die Arbeitsfläche enthält. Dies ermöglicht es, nur den Werkzeugeinsatz an den jeweiligen zu bearbeitenden Leitungstyp anzupassen. Weiterhin muss im Falle eines Verschleisses der Arbeitsfläche nur der Werkzeugeinsatz ausgetauscht werden und nicht auch der Grundkörper.

Im erfindungsgemässen Verfahren kann die Isolierung auch an zwei oder mehr entlang der Längsrichtung der Leitung beabstandeten Einwirkbereich verdrängt werden. Zusätzlich kann die Isolierung in einem entlang der Längsrichtung der Leitung verlaufenden linienförmigen Abschnitt verdrängt werden, der die Einwirkbereiche verbindet. Der linienförmige Abschnitt kann mit oder ohne Ultraschalleinwirkung verdrängt werden. Auf diese Weise kann die Isolierung in einem zylindermantelförmigen Abschnitt vom Leiter entfernt werden, so dass ein Mittenabgriff ermöglicht wird.

Der im erfindungsgemässen Verfahren eingesetzte Ultraschall kann eine Frequenz im Bereich von 15 kHz bis 70 kHz haben.

In einem weiteren Aspekt betrifft die Erfindung auch eine Vorrichtung nach Anspruch 8 zum zumindest teilweisen Abisolieren einer elektrischen Leitung. Mit dieser Vorrichtung kann das oben beschriebene Verfahren durchgeführt werden.

Die Vorrichtung enthält mindestens ein zu Ultraschallschwingungen anregbares Ultraschallwerkzeug mit einer Arbeitsfläche, welche mit einem von einem Ende der Leitung beabstandeten Einwirkbereich der Isolierung in Kontakt bringbar ist. Ultraschall ist derart in den Einwirkbereich einbringbar, dass die Isolierung ausschliesslich im Einwirkbereich und dort zumindest entlang eines Teils, insbesondere entlang der gesamten Umfangsrichtung der Leitung verdrängbar ist, insbesondere indem es dort schmelzbar ist.

Erfindungsgemäss ist die Arbeitsfläche derart stumpf und relativ zur elektrischen Leitung ausrichtbar, dass der Leiter während des Abisolierens nicht durch die Arbeitsfläche beschädigt wird. Das erste Profil der Arbeitsfläche weist an jedem Punkt einen Krümmungsradius von mindestens 0,2 mm auf. In zumindest einem Abschnitt des ersten Profils kann der Krümmungsradius höchstens 6 mm sein. Zusätzlich kann das erste Profil der Arbeitsfläche an jedem Punkt einen Keilwinkel von mindestens 60°, bevorzugt mindestens 90°, besonders bevorzugt mindestens 120° aufweisen.

Das Ultraschallwerkzeug kann in der Umfangsrichtung der Leitung um diese rotierbar sein. Alternativ oder zusätzlich kann das Ultraschallwerkzeug in einer bezüglich der Längsrichtung der Leitung radialen Richtung bewegbar sein. Auf diese Weise können die oben beschriebenen Verfahrensschritte durchgeführt werden.

Die Vorrichtung kann mehrere zu Ultraschallschwingungen anregbare, mit einer jeweiligen Arbeitsfläche versehene Ultraschallwerkzeuge enthalten. Diese Ultraschallwerkzeuge können in der Umfangsrichtung um die Leitung verteilt angeordnet oder anordenbar sein, insbesondere gleichmässig verteilt.

Zu dem bereits erläuterten Zweck enthält die Vorrichtung eine Detektiereinheit, mit der ein Kontakt des Ultraschallwerkzeugs mit dem Leiter detektierbar ist, sowie eine Steuerungseinheit, welche dazu eingerichtet ist, das Einbringen von Ultraschall in den Einwirkbereich zu beenden, wenn ein Kontakt des Ultraschallwerkzeugs mit dem Leiter detektiert wurde.

Die Detektiereinheit kann ein erstes Abgreifelement zum Abgreifen eines elektrischen Potentials der Arbeitsfläche des Ultraschallwerkzeugs aufweisen sowie ein zweites Abgreifelement zum Abgreifen eines zweiten elektrischen Potentials am Leiter. Weiterhin kann die Detektiereinheit einen Spannungsmesser zum Bestimmen der zwischen dem ersten und dem zweiten Potential vorliegenden elektrischen Spannung enthalten. Das zweite Abgreifelement kann zum Abgreifen des elektrischen Potentials am Leiter beispielsweise an einer Stirnfläche am Ende der Leitung oder an einer Umfangsfläche ausgebildet sein, welche zuvor durch zum Beispiel punktuelles Entfernen der Isolierung zugänglich gemacht wurde.

Die Arbeitsfläche kann in einer zur Längsrichtung des Leiters senkrechten zweiten Schnittebene zumindest abschnittsweise eine Krümmung aufweisen, insbesondere eine konkave Krümmung. Zu diesem Zweck kann ein Krümmungsradius der Krümmung in der zweiten Schnittebene an den Radius des elektrischen Leiters angepasst sein und insbesondere im Wesentlichen damit übereinstimmen. Um Beschädigungen des Leiters zu verhindern, kann das zweite Profil der Arbeitsfläche bevorzugt an jedem Punkt einen Krümmungsradius im Bereich von 0,1 mm bis 100 mm und/oder einen Innenwinkel von mindestens 60°, bevorzugt mindestens 120°, weiter bevorzugt mindestens 180°, noch weiter bevorzugt mindestens 240° und besonders bevorzugt mindestens 300° aufweisen. Alternativ oder zusätzlich kann das zweite Profil der Arbeitsfläche an jedem Punkt einen Innenwinkel von mindestens 60°, bevorzugt mindestens 120°, weiter bevorzugt mindestens 180°, noch weiter bevorzugt mindestens 240° und besonders bevorzugt mindestens 300° aufweisen. Es sind auch Arbeitsflächen von der Erfindung umfasst, die in der genannten zweiten Schnittebene keine Krümmung aufweisen.

Wie oben bereits ausgeführt wurde, ist das erfindungsgemässe Verfahren besonders vorteilhaft, wenn die Arbeitsfläche des Ultraschallwerkzeugs in der Längsrichtung der Leitung schwingt. Denn dann kann das Risiko von Beschädigungen des Leiters nochmals deutlich reduziert werden. Der Leiter einer mit diesem vorteilhaften Verfahren zumindest teilweise abisolierten Leitung weist Schleifspuren in der Längsrichtung der Leitung auf, die auf die Schwingungen zurückzuführen ist. Nachfolgend wird die Erfindung anhand mehrerer Ausführungsbeispiele und Zeichnungen im Detail erläutert. Dabei zeigen
- Figur 1:: eine schematische Ansicht einer ersten erfindungsgemässen Vorrichtung mit einem rotierbaren Längsschwinger und einer Leitung in einer schematischen Schnittansicht parallel zur Längsrichtung der Leitung;
- Figur 2a:: eine schematische Ansicht einer zweiten erfindungsgemässen Vorrichtung mit zwei Längsschwingern und einer Leitung in einer schematischen Schnittansicht parallel zur Längsrichtung der Leitung;
- Figur 2b:: die zweite erfindungsgemässe Vorrichtung in einer schematischen Schnittansicht senkrecht zur Längsrichtung der Leitung;
- Figur 3:: eine schematische Ansicht einer dritten erfindungsgemässen Vorrichtung mit einem Torsionsschwinger;
- Figuren 4a bis 4d:: mögliche erste Konturen von Arbeitsflächen;
- Figur 5:: eine schematische Darstellung einer vierten erfindungsgemässen Vorrichtung mit einem Längsschwinger, einer Detektiereinheit und einer Steuerungseinheit;
- Figur 6:: eine schematische Darstellung eines Linearschwingers einer fünften erfindungsgemässen Vorrichtung mit einem Grundkörper und einem Werkzeugeinsatz;
- Figuren 7a und 7b:: weitere Paare erfindungsgemässer Arbeitsflächen in einer zweiten Schnittebene;
- Figur 8a:: eine erfindungsgemässe teilweise abisolierte Leitung in einer Seitenansicht;
- Figur 8b:: die Leitung gemäss Figur 8a in einer Draufsicht.

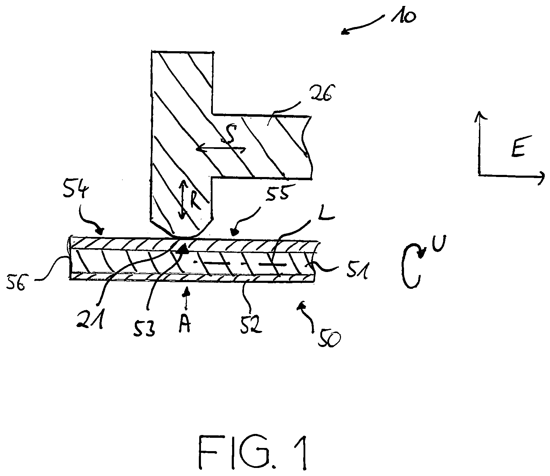

Figur 1 zeigt schematisch eine erfindungsgemässe Vorrichtung 10 zum zumindest teilweisen Abisolieren einer elektrischen Leitung 50, die hier als Rundleitung 50 ausgebildet ist. Die Leitung 50 erstreckt sich entlang einer Längsrichtung L und enthält einen elektrischen Leiter 51 und eine diesen in Umfangsrichtung U vollständig umhüllende Isolierung 52. Der Leiter 51 kann beispielsweise aus Kupfer oder Aluminium bestehen und die Isolierung 52 aus einem an sich für diese Verwendung bekannten Kunststoff oder einem textilen Isolationswerkstoff.

Die Vorrichtung 10 weist ein zu Ultraschallschwingungen anregbares Ultraschallwerkzeug auf und ist als Linearschwinger 26 mit einer Arbeitsfläche 21 ausgebildet. In einer die Längsrichtung L enthaltenden ersten Schnittebene E, die mit der Zeichenebene der Figur 1 übereinstimmt, hat die Arbeitsfläche 21 ein erstes Profil, welches an jedem Punkt einen Krümmungsradius aufweist, der in Abhängigkeit vom Material und der Dicke der Isolierung 52 mindestens 0,2 mm und zumindest abschnittsweise höchstens 6 mm sein kann. Angesichts fehlender Kanten ist in jedem Punkt der Keilwinkel gleich 180°, also grösser als 120° (siehe dazu auch im Detail die Figuren 4a bis 4d).

Um die elektrische Leitung 50 zumindest teilweise abzuisolieren, wird in einem ersten Schritt a) des erfindungsgemässen Verfahrens der Linearschwinger 26 an einer axialen Position A der Leitung 50 in einer bezüglich der Längsrichtung L radialen Richtung R auf die Leitung 50 hin bewegt. Die axiale Position A definiert einen Einwirkbereich 53 der Isolierung 52, der von einem Ende 56 der Leitung 50 beabstandet ist. Auf diese Weise wird die Arbeitsfläche 21 in Kontakt mit dem Einwirkbereich 53 der Isolierung 52 gebracht.

In einem nachfolgenden Schritt b) wird mittels des Linearschwingers 26 Ultraschall in den Einwirkbereich 53 eingebracht. Die Arbeitsfläche 21 des Linearschwingers 26 schwingt dabei in Richtung einer Schwingungsachse S, die parallel zur Längsrichtung L der Leitung 50 verläuft. Alternativ dazu könnte der Linearschwinger aber auch in der radialen Richtung R schwingen. Der Ultraschall bewirkt, dass die Isolierung 52 im Einwirkbereich 53 schmilzt und verdrängt wird. Dieses Verdrängen geschieht ausschliesslich im Einwirkbereich 53, also unter anderem nicht auch am Ende 56 der Leitung 50. Währenddessen sorgt eine hier nicht dargestellte Mechanik dafür, dass der Linearschwinger 26 in der Umfangsrichtung U um die Leitung 50 herum rotiert. Im Einwirkbereich 53 wird die Isolierung 52 im Wesentlichen entlang der gesamten Umfangsrichtung U geschmolzen und hierdurch verdrängt.

Aufgrund der genannten Krümmungsradien des ersten Profils der Arbeitsfläche 21 ist die Arbeitsfläche 21 derart stumpf, dass der Leiter 51 während des Abisolierens nicht durch sie beschädigt wird. Insbesondere werden also keine einzelnen Drähte des Leiters 51 durchtrennt. Hierdurch können elektrische Leitungen 50 mit deutlich erhöhter und einheitlicherer Qualität und geringerem Ausschuss hergestellt werden, als dies mit den bisher bekannten Verfahren und Vorrichtungen möglich war.

Ohne dass dabei der Leiter 51 geschweisst wird, wird der Linearschwinger 26 nach Schritt b) an der gleichen axialen Position A in der radialen Richtung R wieder von der Leitung 50 wegbewegt. Auch zwischen der Bewegung auf die Leitung 50 hin und der Bewegung von der Leitung 50 weg verbleibt der Linearschwinger 26 im Wesentlichen an der gleichen axialen Position A, wird also nicht entlang der Längsrichtung L bewegt.

In einem optionalen weiteren Schritt c) kann die Isolierung 52 im Einwirkbereich 53 in einen ersten Teil 54 und einen bezüglich des Einwirkbereichs 53 gegenüberliegenden zweiten Teil 55 getrennt werden. Besonders bevorzugt wird das Trennen der Isolierung 52 im Schritt c) mithilfe des Linearschwingers 26 selbst durchgeführt. Auf diese Weise kann auf ein weiteres Werkzeug verzichtet werden. Falls die Leitung 50 nicht unmittelbar weiterverarbeitet werden soll, ist es vorteilhaft, wenn der erste Teil 54 nur bis zu einem Abstand von beispielsweise 1 mm zum zweiten Teil 55 gezogen wird.

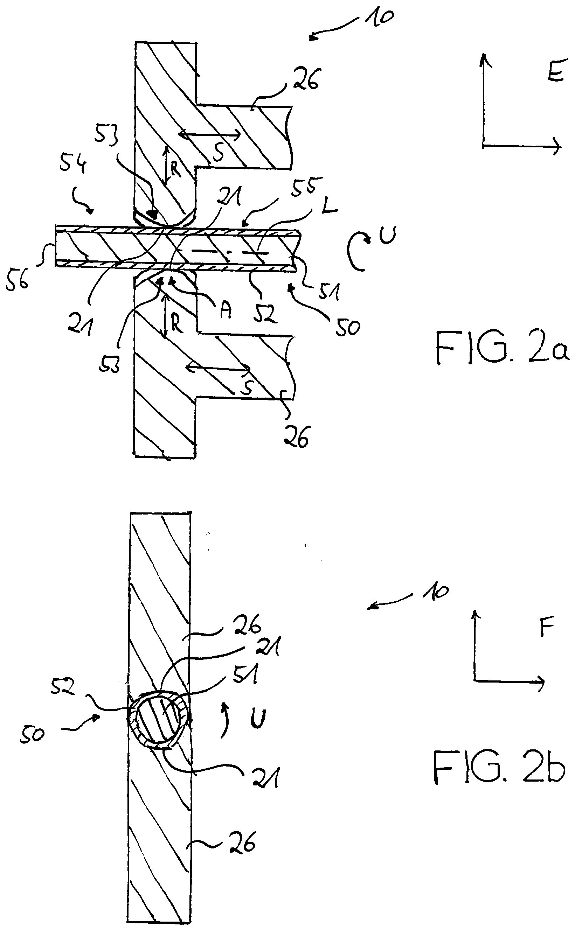

Die in den Figuren 2a und 2b dargestellte zweite erfindungsgemässe Vorrichtung 10 enthält nicht nur ein, sondern zwei zu Ultraschallschwingungen anregbare Ultraschallwerkzeuge, die beide in Form von Linearschwingern 26 mit einer jeweiligen Arbeitsfläche 21 ausgebildet sind. Die beiden Linearschwinger 26 sind auf diese Weise in der Umfangsrichtung U gleichmässig um die Leitung 50 verteilt angeordnet.

Wie die Figur 2b zeigt, weist die Arbeitsfläche 21 in einer zur Längsrichtung L senkrechten zweiten Schnittebene F ein zweites Profil mit einer konkaven Krümmung auf, deren Krümmungsradius mit dem Radius der Leitung 50 übereinstimmt und die das Schmelzen und dadurch das Verdrängen im Wesentlichen entlang der gesamten Umfangsrichtung U erleichtert.

Im erfindungsgemässen Verfahren werden beide Linearschwinger 26 in einem Schritt a) an einer axialen Position A der Leitung 50 in einer bezüglich der Längsrichtung L radialen Richtung R auf die Leitung 50 hin bewegt und dringen somit in einem Einwirkbereich 53 in die Isolierung 52 ein, wo sie von gegenüberliegenden Seiten auf die Leitung 50 einwirken. In einem nachfolgenden Schritt b) werden beide Linearschwinger 26 an der gleichen axialen Position A in der radialen Richtung R wieder von der Leitung 50 wegbewegt. Während des gesamten Verfahrens findet kein Schweissen des Leiters 51 statt, und die beiden Linearschwinger 26 werden nicht entlang der Längsrichtung L der Leitung 50 bewegt, verbleiben also an der gleichen axialen Position A.

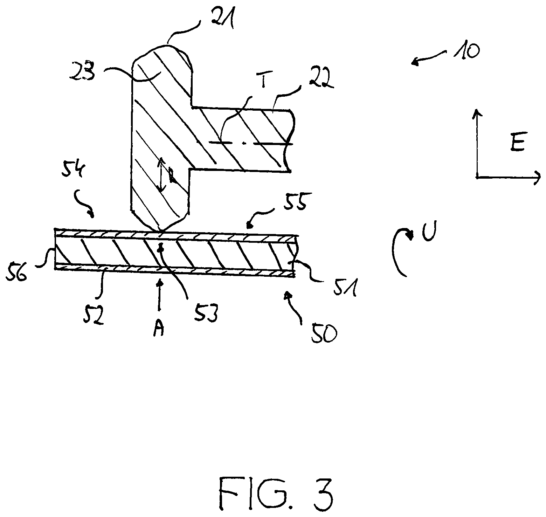

Die dritte erfindungsgemässe Vorrichtung 10 in Figur 3 enthält ein Ultraschallwerkzeug in Form eines Torsionsschwingers 22. Dieser weist einen scheibenförmigen Arbeitsbereich 23 auf, der bezüglich einer Torsionsachse T des Torsionsschwingers 22 zylindersymmetrisch ausgebildet ist. Die Arbeitsfläche 21 ist durch die Umfangsfläche des Arbeitsbereichs 23 gebildet. Der Torsionsschwinger 22 ist in der Umfangsrichtung U der Leitung 50 um diese rotierbar. Durch Rotation des Torsionsschwingers 22 um die Leitung 50 herum im kann die Isolierung 52 auf besonders einfache Weise entlang der gesamten Umfangsrichtung U der Leitung 50 gleichmässig geschmolzen und hierdurch verdrängt werden. Der Torsionsschwinger 22 kann während des Abisolierens einer Leitung 50 und/oder zwischen dem Abisolieren einer ersten Leitung 50 und dem Abisolieren einer zweiten Leitung um seine Torsionsachse T gedreht werden, wodurch die Standzeit des Torsionsschwingers 22 verlängert werden kann.

Die Figuren 4a bis 4d zeigen Schnittansichten möglicher erster Profile der Arbeitsfläche 21 in der ersten Schnittebene E. In Figur 4a hat das erste Profil einen mittleren geraden Abschnitt 27, der definitionsgemäss eine Krümmung von ∞ aufweist und beidseits von jeweils einer konvexen Rundung 28 mit einem Krümmungsradius im Bereich von 0,2 mm bis 6 mm begrenzt ist.

Das in Figur 4b dargestellte nicht erfindungsgemässe erste Profil enthält zwar eine zwischen zwei geraden Abschnitten 27 gebildete Kante 29 mit einem Krümmungsradius, der kleiner als 0,2 mm ist; allerdings ist hier der Keilwinkel β=90°, so dass auch mit dieser Arbeitsfläche 21 Beschädigungen eines Leiters 51 verhindert werden können. In Figur 4c sind für ein nicht erfindungsgemässes Profil zwei Kanten 29 mit einem Keilwinkel β=60° vorhanden, die eine konvexe Rundung 28 einschliessen. Das Ultraschallwerkzeug 26 in Figur 4d hat zwar zwei vergleichsweise spitze Kanten mit einem Keilwinkel β=90°; diese Kanten gehören jedoch nicht zur Arbeitsfläche 21, da sie bei der Durchführung des erfindungsgemässen Verfahrens nicht in Kontakt mit der Leitung geraten.

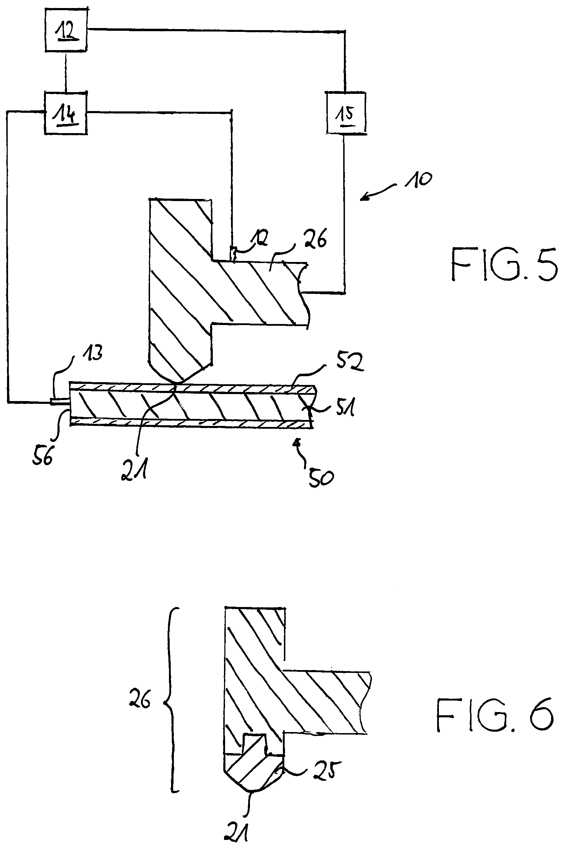

Die in Figur 5 dargestellte vierte erfindungsgemässe Vorrichtung 10 ist ähnlich zu der in Figur 1 gezeigten, enthält jedoch weiterhin eine Detektiereinheit, mit der ein Kontakt des Linearschwingers 26 mit dem Leiter 51 detektierbar ist, sowie eine Steuerungseinheit 12, mit der das Einbringen von Ultraschall in den Einwirkbereich 53 der Isolierung 52 und auch die Bewegung des Linearschwingers 26 beendbar ist, wenn ein Kontakt des Linearschwingers 26 mit dem Leiter 51 detektiert wurde. Die Detektiereinheit enthält ein erstes Abgreifelement 12 zum Abgreifen eines ersten elektrischen Potentials der Arbeitsfläche 21 des Linearschwingers 26 sowie ein zweites Abgreifelement 13 zum Abgreifen eines zweiten elektrischen Potentials am Leiter 51. Weiterhin umfasst die Detektiereinheit einen Spannungsmesser 14 zum Bestimmen der zwischen dem ersten und dem zweiten Potential vorliegenden Spannung. Die Steuerungseinheit 12 kann so eingestellt werden, dass sie von einem Kontakt des Linearschwingers 26 mit dem Leiter 51 ausgeht, wenn der Betrag der vom Spannungsmesser 14 gemessenen Spannung unter einen vorgegebenen Schwellenwert sinkt. Ist dieser Schwellenwert unterschritten, kann die Steuerungseinheit 12 das Einbringen von Ultraschall in den Einwirkbereich 53 und die Bewegung des Linearschwingers 26 beenden, indem sie einen mit dem Linearschwinger 26 verbundenen Generator 15 entsprechend ansteuert. Mit einer solchen Detektiereinheit kann noch wirkungsvoller eine mögliche Beschädigung des Leiters 51 verhindert werden.

Der in Figur 6 gezeigte Linearschwinger 26 einer fünften erfindungsgemässen Vorrichtung enthält einen Grundkörper 24 und einen damit lösbar verbundenen Werkzeugeinsatz 25, der die Arbeitsfläche 21 enthält. Dies ermöglicht es, nur den Werkzeugeinsatz 25 an den jeweiligen Leitungstyp anzupassen. Weiterhin muss im Falle eines Verschleisses der Arbeitsfläche 21 nur der Werkzeugeinsatz 25 ausgetauscht werden, nicht jedoch auch der Grundkörper 24.

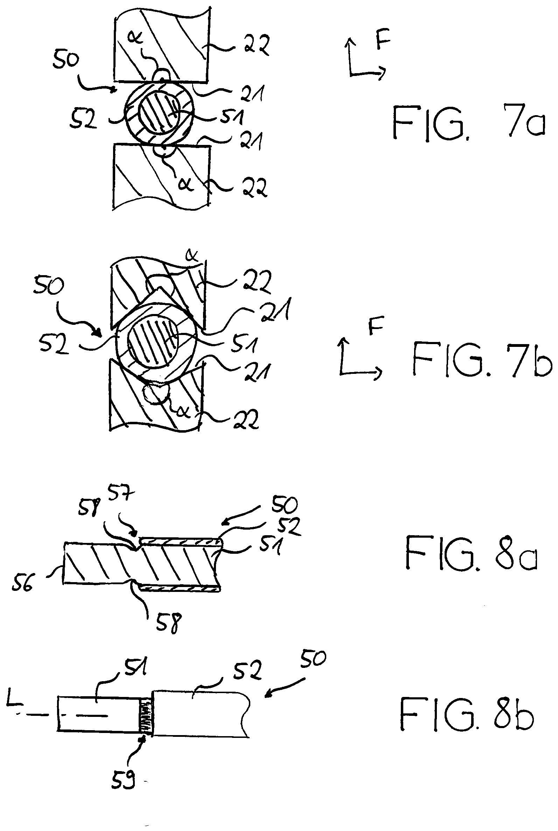

Die Figuren 7a und 7b zeigen die zweiten Profile weiterer Paare erfindungsgemässer Arbeitsflächen 21 in einer zweiten Schnittebene F, die bei bestimmungsgemässer Verwendung senkrecht zur Längsrichtung L der Leitung 50 verläuft. In Figur 7a sind beide Arbeitsflächen 21 gerade, haben also überall einen Innenwinkel α=180°. In Figur 7b haben die Arbeitsflächen 21 eine V-Form und weisen am Mittelpunkt einen Innenwinkel α>180° auf.

In den Figuren 8a und 8b ist eine teilweise abisolierte elektrische Leitung 50 dargestellt, von der ein hier nicht gezeigter erster Teil der Isolierung 52 getrennt wurde. Im Bereich der Trennstelle 57 weist der elektrische Leiter 51 zwei zur besseren Verdeutlichung in Figur 8a übertrieben gross dargestellte Einbuchtungen 58 auf, die auf den Kontakt des Leiters 51 mit Arbeitsflächen von Ultraschallwerkzeugen zurückzuführen sind. Diese Einbuchtungen 58 bilden blosse Deformationen des elektrischen Leiters 51, die weder seine elektrischen Eigenschaften noch seine mechanische Festigkeit verändern, insbesondere bei einem nachfolgenden Ultraschallschweissen der Leitung 50.

Die Draufsicht in Figur 8b zeigt Schleifspuren 59 am Leiter 51, die in der Längsrichtung L der Leitung 50 verlaufen. Diese Schleifspuren 59 lassen erkennen, dass beim Abisolieren Schwingungen eingeleitet wurden, die in dieser Richtung erfolgten.

## Patentansprüche

1. Verfahren zum zumindest teilweisen Abisolieren einer elektrischen Leitung (50), insbesondere einer Rundleitung (50), mit einer Längsrichtung (L), welche mindestens einen elektrischen Leiter (51) und eine diesen, insbesondere in Umfangsrichtung (U) vollständig, umhüllende Isolierung (52) enthält, umfassend die Schritte
a) Inkontaktbringen einer Arbeitsfläche (21) mindestens eines zu Ultraschallschwingungen anregbaren Ultraschallwerkzeugs (22; 26) mit einem von einem Ende (56) der Leitung (50) beabstandeten Einwirkbereich (53) der Isolierung (52),
b) Einbringen von Ultraschall mittels des Ultraschallwerkzeugs (22; 26) in den Einwirkbereich (53), um die Isolierung (52) ausschliesslich im Einwirkbereich (53) und dort zumindest entlang eines Teils, insbesondere entlang der gesamten Umfangsrichtung (U) zu verdrängen,
die Arbeitsfläche (21) derart relativ zur elektrischen Leitung (50) ausgerichtet ist und in einer die Längsrichtung (L) enthaltenden ersten Ebene (E) ein derart stumpfes erstes Profil aufweist, dass der Leiter (51) während des Abisolierens nicht durch die Arbeitsfläche (21) beschädigt wird,
wobei das erste Profil der Arbeitsfläche (21) an jedem Punkt einen Krümmungsradius von mindestens 0,2 mm aufweist, **dadurch gekennzeichnet, dass**
Schritt b) beendet wird, wenn ein Kontakt des Ultraschallwerkzeugs (22; 26) mit dem Leiter (51) detektiert wird.

2. Verfahren gemäss Anspruch 1,
wobei das erste Profil der Arbeitsfläche (21) an jedem Punkt einen Krümmungsradius von höchstens 6 mm aufweist.

3. Verfahren gemäss einem der vorangehenden Ansprüche,
wobei das erste Profil der Arbeitsfläche (21) an jedem Punkt einen Keilwinkel (β) von mehr als 60°, bevorzugt mehr als 90°, besonders bevorzugt mehr als 120° aufweist.

4. Verfahren gemäss einem der vorangehenden Ansprüche,
wobei ein Kontakt des Ultraschallwerkzeugs (22; 26) mit dem Leiter (51) über die zwischen der Arbeitsfläche (21) des Ultraschallwerkzeugs (22; 26) und dem Leiter (51) vorliegende Spannung detektiert wird.

5. Verfahren gemäss einem der vorangehenden Ansprüche, enthaltend den weiteren Schritt:
c) Trennen der Isolierung (52) im Einwirkbereich (53) in einen ersten Teil (54) und einen bezüglich des Einwirkbereichs (53) gegenüberliegenden zweiten Teil (55).

6. Verfahren gemäss Anspruch 5,
wobei das Trennen der Isolierung (52) im Schritt c) mithilfe des Ultraschallwerkzeugs (22; 26) durchgeführt wird.

7. Verfahren gemäss einem der vorangehenden Ansprüche,
wobei die Arbeitsfläche (21) des Ultraschallwerkzeugs (22; 26) in der Längsrichtung (L) der Leitung (50) schwingt.

8. Vorrichtung (10) zum zumindest teilweisen Abisolieren einer elektrischen Leitung (50), insbesondere einer Rundleitung (50), mit einer Längsrichtung (L), welche mindestens einen elektrischen Leiter (51) und eine diesen, insbesondere in Umfangsrichtung (U) vollständig, umhüllende Isolierung (52) enthält, insbesondere Vorrichtung (10) zum zumindest teilweisen Abisolieren in einem Verfahren gemäss einem der vorangehenden Ansprüche,
wobei die Vorrichtung (10) mindestens ein zu Ultraschallschwingungen anregbares Ultraschallwerkzeug (22; 26) mit einer Arbeitsfläche (21) enthält, welche durch Bewegen des Ultraschallwerkzeugs (22, 26) in einer bezüglich der Längsrichtung (L) radialen Richtung (R) auf die Leitung (50) hin mit einem von einem Ende (56) der Leitung (50) beabstandeten Einwirkbereich (53) der Isolierung (52) in Kontakt bringbar ist, wobei Ultraschall derart in den Einwirkbereich (53) einbringbar ist, dass die Isolierung (52) ausschliesslich im Einwirkbereich (53) und dort zumindest entlang eines Teils, insbesondere entlang der gesamtem Umfangsrichtung (U) verdrängbar ist,
wobei die Arbeitsfläche (21) derart relativ zur elektrischen Leitung (50) ausrichtbar ist und in einer die Längsrichtung (L) enthaltenden ersten Ebene (E) ein derart stumpfes erstes Profil aufweist, dass der Leiter (51) während des Abisolierens nicht durch die Arbeitsfläche (21) beschädigt wird,
wobei das erste Profil der Arbeitsfläche (21) an jedem Punkt einen Krümmungsradius von mindestens 0,2 mm aufweist, **dadurch gekennzeichnet, dass**
die Vorrichtung (10) eine Detektiereinheit enthält, mit der ein Kontakt des Ultraschallwerkzeugs (22; 26) mit dem Leiter (51) detektierbar ist, sowie eine Steuerungseinheit (12), welche dazu eingerichtet ist, das Einbringen von Ultraschall in den Einwirkbereich (53) zu beenden, wenn ein Kontakt des Ultraschallwerkzeugs (22; 26) mit dem Leiter (51) detektiert wurde.

9. Vorrichtung (10) gemäss Anspruch 8,
wobei das erste Profil der Arbeitsfläche (21) an jedem Punkt einen Krümmungsradius von höchstens 6 mm aufweist.

10. Vorrichtung (10) gemäss einem der Ansprüche 8 und 9,
wobei das erste Profil der Arbeitsfläche (21) an jedem Punkt einen Keilwinkel (β) von mehr als 60°, bevorzugt mehr als 90°, besonders bevorzugt mehr als 120° aufweist.

## Claims

1. Method for at least partially stripping an electrical cable (50), in particular a round cable (50), with a longitudinal direction (L), which contains at least one electrical conductor (51) and insulation (52) completely enveloping the latter, in particular in the circumferential direction (U), comprising the steps
a) Bringing a working surface (21) of at least one ultrasonic tool (22; 26), which can be excited to ultrasonic vibrations, into contact with an effective region (53) of the insulation (52) that is spaced from one end (56) of the cable (50).
b) Introducing ultrasound into the effective region (53) using the ultrasonic tool (22; 26) in order to displace the insulation (52) exclusively in the action region (53) and there at least along a portion, in particular along the entire circumferential direction (U),
the working surface (21) is oriented relative to the electrical cable (50) and has a first profile in a first plane (E) containing the longitudinal direction (L) that is so blunt that the conductor (51) is not damaged by the working surface (21) during stripping,
wherein the first profile of the working surface (21) has a radius of curvature of at least 0.2 mm at each point, **characterized in that**
step b) is terminated when contact between the ultrasonic tool (22; 26) and the conductor (51) is detected.

2. Method according to claim 1, wherein the first profile of the working surface (21) has a radius of curvature of at most 6mm at each point.

3. Method according to one of the preceding claims, wherein the first profile of the working surface (21) has a wedge angle (β) of more than 60°, preferably more than 90°, and particularly preferably more than 120° at each point.

4. Method according to one of the preceding claims, wherein contact between the ultrasonic tool (22; 26) and the conductor (51) is detected via the voltage present between the working surface (21) of the ultrasonic tool (22; 26) and the conductor (51).

5. Method according to one of the preceding claims, comprising the further step of:
c) Separating the insulation (52) in the effective region (53) into a first part (54) and a second part (55) opposite the effective region (53).

6. Method according to claim 5, wherein the separation of the insulation (52) in step c) is performed using the ultrasonic tool (22; 26).

7. Method according to one of the preceding claims, wherein the working surface (21) of the ultrasonic tool (22; 26) oscillates in the longitudinal direction (L) of the cable (50).

8. Device (10) for at least partially stripping a cable (50), in particular a round cable (50) with a longitudinal direction (L), which contains at least one electrical conductor (51) and insulation (52) completely enveloping the latter, in particular in the circumferential direction (U), in particular a device (10) for at least partially stripping insulation in a method according to one of the preceding claims,
wherein the device (10) comprises at least one ultrasonic tool (22; 26) that can be excited to produce ultrasonic vibrations, with a working surface (21) that, by moving the ultrasonic tool (22, 26) in a direction (R) radial to the longitudinal direction (L) towards the cable (50) with an effective region (53) of the insulation (52) spaced from one end (56) of the cable (50), whereby ultrasound can be introduced into the effective region (53) in such a way that the insulation (52) can be displaced exclusively in the effective region (53) and there at least along a part, in particular along the entire circumferential direction (U),
wherein the working surface (21) can be oriented relative to the electrical cable (50) and has a first profile in a first plane (E) containing the longitudinal direction (L) that is so blunt that the conductor (51) is not damaged by the working surface (21) during stripping,
wherein the first profile of the working surface (21) has a radius of curvature of at least 0.2 mm at each point, **characterized in that**
the device (10) includes a detection unit with which contact between the ultrasonic tool (22; 26) with the conductor (51) can be detected, as well as a control unit (12) which is designed to terminate the introduction of ultrasound into the effective region (53) when contact between the ultrasonic tool (22; 26) and the conductor (51) has been detected.

9. Device (10) according to claim 8,
wherein the first profile of the working surface (21) has a radius of curvature of no more than 6 mm at each point.

10. Device (10) according to one of claims 8 and 9,
wherein the first profile of the working surface (21) has a wedge angle (β) of more than 60°, preferably more than 90°, and particularly preferably more than 120°, at each point.

## Revendications

1. Procédé pour dénuder au moins partiellement un câble électrique (50), en particulier un câble rond (50), ayant une direction longitudinale (L), qui comprend au moins un conducteur électrique (51) et une isolation (52) enveloppant celui-ci, en particulier complètement dans la direction circonférentielle (U), comprenant les étapes suivantes
a) Mise en contact d'une surface de travail (21) d'au moins un outil à ultrasons (22 ; 26) pouvant être excité par des vibrations ultrasonores avec une zone d'action (53) de l'isolation (52) espacée d'une extrémité (56) du conducteur (50).
b) Application d'ultrasons à l'aide de l'outil à ultrasons (22 ; 26) dans la zone d'action (53) afin de repousser l'isolation (52) exclusivement dans la zone d'action (53) et au moins le long d'une partie de celle-ci, en particulier le long de toute la direction circonférentielle (U),
la surface de travail (21) est alignée par rapport au câble électrique (50) et présente, dans un premier niveau (E) contenant la direction longitudinale (L), un premier profil émoussé de telle sorte que le conducteur (51) ne soit pas endommagé par la surface de travail (21) pendant le dénudage,
le premier profil de la surface de travail (21) présentant à chaque point un rayon de courbure d'au moins 0,2 mm, **caractérisé en ce que**
l'étape b) prend fin lorsqu'un contact entre l'outil à ultrasons (22 ; 26) et le conducteur (51) est détecté.

2. Procédé selon la revendication 1,
le premier profil de la surface de travail (21) présentant à chaque point un rayon de courbure maximal de 6 mm.

3. Procédé selon l'une des revendications précédentes,
le premier profil de la surface de travail (21) présentant en chaque point un angle de coin (β) supérieur à 60°, de préférence supérieur à 90°, et de manière particulièrement préférée supérieur à 120°.

4. Procédé selon l'une des revendications précédentes,
le contact de l'outil à ultrasons (22 ; 26) avec le conducteur (51) étant détecté par la tension présente entre la surface de travail (21) de l'outil à ultrasons (22 ; 26) et le conducteur (51).

5. Procédé selon l'une des revendications précédentes, comprenant l'étape supplémentaire suivante:
c) Séparation de l'isolation (52) dans la zone d'action (53) en une première partie (54) et une deuxième partie (55) opposée à la zone d'action (53).

6. Procédé selon la revendication 5,
la séparation de l'isolation (52) à l'étape c) étant effectuée à l'aide de l'outil à ultrasons (22 ; 26).

7. Procédé selon l'une des revendications précédentes,
la surface de travail (21) de l'outil à ultrasons (22 ; 26) oscillant dans la direction longitudinale (L) du câble (50).

8. Dispositif (10) pour dénuder au moins partiellement un câble électrique (50), en particulier un câble rond (50), avec une direction longitudinale (L), qui contient au moins un conducteur électrique (51) et une isolation (52) qui l'enveloppe complètement, en particulier dans la direction circonférentielle (U), en particulier dispositif (10) pour le dénudage au moins partiel dans un procédé selon l'une des revendications précédentes, le dispositif (10) comprenant au moins un outil à ultrasons pouvant être excité par des vibrations ultrasonores (22 ; 26) pouvant être excité par des vibrations ultrasonores, avec une surface de travail (21) qui, par le déplacement de l'outil à ultrasons (22, 26) dans une direction radiale (R) par rapport à la direction longitudinale (L) vers la câble (50), peut être mise en contact avec une zone d'action (53) de l'isolation espacée d'une extrémité (56) de la câble (50) (52) espacée d'une extrémité (56) de la câble (50), les ultrasons pouvant être introduits dans la zone d'action (53) de telle sorte que l'isolation (52) puisse être déplacée exclusivement dans la zone d'action (53) et au moins le long d'une partie de celle-ci, en particulier le long de toute la direction circonférentielle (U),
la surface de travail (21) pouvant être alignée par rapport au câble électrique (50) et présentant, dans un premier plan (E) contenant la direction longitudinale (L), un premier profil si émoussé que le conducteur (51) n'est pas endommagé par la surface de travail (21) pendant le dénudage,
le premier profil de la surface de travail (21) présentant en chaque point un rayon de courbure d'au moins 0,2 mm, **caractérisé en ce que**
le dispositif (10) comprend une unité de détection permettant de détecter un contact entre l'outil à ultrasons (22 ; 26) et le conducteur (51), ainsi qu'une unité de commande (12) qui est conçue pour mettre fin à l'introduction d'ultrasons dans la zone d'action (53),
lorsqu'un contact entre l'outil à ultrasons (22 ; 26) et le conducteur (51) a été détecté.

9. Dispositif (10) selon la revendication 8,
le premier profil de la surface de travail (21) présentant à chaque point un rayon de courbure maximal de 6 mm.

10. Dispositif (10) selon l'une des revendications 8 et 9,
le premier profil de la surface de travail (21) présentant en chaque point un angle de coin (β) supérieur à 60°, de préférence supérieur à 90°, et de manière particulièrement préférée supérieur à 120°.
